Europäisches Patentamt

European Patent Office

Office européen des brevets

(11) Veröffentlichungsnummer: **0 417 540 A2**

(12) **EUROPÄISCHE PATENTANMELDUNG**

(21) Anmeldenummer: 90116456.6

(22) Anmeldetag: 28.08.90

(51) Int. Cl.5: **C09J 175/04**, C08G 18/70,
//(C09J175/04,175:04,177:00,
167:00,157:00)

(30) Priorität: 09.09.89 DE 3930138

(43) Veröffentlichungstag der Anmeldung:
20.03.91 Patentblatt 91/12

(84) Benannte Vertragsstaaten:
CH DE FR GB IT LI

(71) Anmelder: BAYER AG

W-5090 Leverkusen 1 Bayerwerk(DE)

(72) Erfinder: Hänsel, Eduard, Dr.
Espenstrasse 2
W-5600 Wuppertal 1(DE)
Erfinder: Hess, Heinrich, Dr.
Auf der Schildwache 13a
W-5000 Köln 80(DE)
Erfinder: Arend, Günter, Dr.
Claudiusstrasse 42
W-4047 Dormagen(DE)
Erfinder: Grögler, Gerhard, Dr.
von-Diergardt-Strasse 48
W-5090 Leverkusen 1(DE)
Erfinder: Kopp, Richard, Dr.
Bilharzstrasse 15
W-5000 Köln 80(DE)

(54) Polyurethan-Reaktivklebstoffmassen mit feindispersen Polymeren.

(57) Polyurethan-Reaktivklebstoffmassen auf Basis von Polyisocyanaten mit desaktivierten NCO-Gruppen und isocyanatreaktiven Verbindungen enthalten zusätzlich feindisperse Polymerteilchen.

EP 0 417 540 A2

## POLYURETHAN-REAKTIVKLEBSTOFFMASSEN MIT FEINDISPERSEN POLYMEREN

Gegenstand der Erfindung sind Polyurethan-Reaktivklebstoffmassen mit feindispersen Polymeren und Verfahren zur Verklebung von Substraten mit den erfindungsgemäßen Polyurethan-Reaktivklebstoffmassen.

Die Fähigkeit von desaktivierten Polyisocyanaten, mit geeigneten hydroxy- oder aminofunktionellen Verbindungen Mischungen zu ermöglichen, die bei Raumtemperatur in dispergierter Phase >6 Monate lagerstabil bleiben, wurde in Houben-Weyl "Methoden der organischen Chemie", Band E 20/2, Thieme-Verlag, Stuttgart 1987, beschrieben

Durch Auswahl spezieller hydroxy- und/oder aminofunktioneller Reaktionskomponenten erhält man mit den obengenannten Polyisocyanaten bei Raumtemperatur lagerstabile Mischungen, die gemäß DE-A 34 03 499 zu Klebstoffen von sehr guter Bindefestigkeit ausgehärtet werden können.

Diese bei Raumtemperatur lagerstabilen, aus desaktivierten Polyisocyanaten und hydroxy- und/oder aminofunktionellen Verbindungen aufgebauten, durch Wärmeeinwirkung aushärtbaren 1K-PU-Klebsysteme haben in den bevorzugten Zubereitungen oftmals teure, schwierig zu synthetisierende Komponenten als Mischungsbestandteile.

Der relativ niedrigviskose Zustand der genannten Mischungen kann bei vertikalen Klebfugen oder bei montagebedingten Überkopfverklebungen" darüber hinaus zu Beeinträchtigungen der Klebfugenkontinuität führen.

Der Erfindung lag daher die Aufgabe zugrunde, auf Basis von Polyurethan-Reaktivklebstoffmassen mit desaktivierten Polyisocyanaten verbesserte Systeme zur Verfügung zu stellen.

Gegenstand der Erfindung sind Polyurethan-Reaktivklebstoffmassen auf Basis von

A) Polyisocyanaten mit desaktivierter Teilchenoberfläche,

B) isocyanatreaktiven Verbindungen mit einem $MG_w$ größer als 400,

C) gegebenenfalls wenigstens einem Kettenverlängerer mit einem Molekulargewicht kleiner als 400,

D) gegebenenfalls üblichen Polyurethankatalysatoren,

E) gegebenenfalls üblichen anorganischen Zusatzstoffen, dadurch gekennzeichnet, daß zusätzlich feindisperse, bei einer Temperatur kleiner als 70° C feste Polymere P mit einem $MG_w$ von wenigstens 3000 enthalten sind.

Die zugesetzten Polymerteilchen haben vorzugsweise einen maximalen Teilchendurchmesser von kleiner als 200 μMeter. Der maximale Teilchendurchmesser ist definiert als Durchmesser derjenigen Teilchen, die durch ein Sieb von gegebener Maschenweite noch abgesiebt werden können. Zum Siebverfahren und zur Korngrößenbestimmung s.a. Ullmann, "Enzyclopädie der technischen Chemie", Bd. 5, S. 738, Verlag Chemie, Weinheim.

In einer besonders bevorzugten Ausführungsform haben die Teilchen einen maximalen Durchmesser von kleiner als 150 μMeter. Vorzugsweise haben wenigstens 99 Gewichtsprozent der Teilchen einen Durchmesser von mindestens 0,25 μm, insbesondere 0,5 μm.

Als Polymere P sind insbesondere geeignet:

1. lineare Hydroxypolyurethane auf der Basis von aliphatischen Diolen und/oder Hydroxypolyethern auf Ethylenoxid und/oder Propylenoxid-Basis einerseits sowie aromatischen Polyisocyanaten wie MDI und TDI andererseits MG größer als 20.000.

2. Copolyamide insbesondere auf der Basis von Caprolactam und/oder Lauryllactam und dimeren Fettsäuren und/oder aliphatischen Dicarbonsäuren. Besonders geeignete Copolyamide haben einen Erweichungsbe reich von 80° C - 120° C. Näheres zu Copolyamiden s.a. Kunststoff-Handbuch, Band VI, Hanser-Verlag München 1966, S. 356 ff.

3. Copolymere aus a-Olefinen, bevorzugt Ethylen mit Vinylacetat insbesondere mit einem Vinylacetatgehalt von 8 - 80 Gew.-%, insbesondere von 18 - 55 % und mittleren Molgewichten größer als 40.000.

Ebenso geeignet sind Polyvinylalkohole, wie sie durch Hydrolyse bzw. partielle Hydrolyse von Polyvinylestern nach K. Noro in "Polyvinyl Alcohol", Wiley & Sons, New York 1973, hergestellt werden können. Der Hydrolysegrad partiell hydrolisierter Polyvinylester muß nicht alle vorhandenen Estergruppen erfassen, sondern kann sich auf 1 - 100 % der vorhandenen Esterfunktionen beziehen.

4. Polyvinylformale und -acetale, bevorzugt Polyvinylbutyrale mit Hydroxylfunktionen, s. "Polyvinyl Alcohol", Wiley & Sons, New York 1973, mit einem Acetalisierungsgrad bis zu 80 %.

5. Weitgehend lineare Polyester, insbesondere auf Basis von aromatischen Dicarbonsäuren. Besonders bevorzugt sind gesättigte Copolyester mit Erweichungstemperaturen von + 70° C bis 150° C, wie sie in "Schmelzklebstoffe" von R. Jordan, Hinterwaldner Verlag, München 1985, beschrieben werden.

6. Copolymere von Acrylnitril, Butadien und Styrol mit einem Polybutadienanteil von 0,1 - 50 Gew.-%

7. Polyvinylchlorid und Polyvinylchlorid-Mischpolymerisate,

8. Polyethylen, insbesondere chlorsulfoniert,
9. gegebenenfalls verseifte Vinylchlorid/Vinylacetat-Copolymere,
10. Styrolacrylnitrilcopolymerisate.

Der Vorteil der erfindungsgemäßen Polymeren P als Zusatz zu Reaktivklebstoffen auf der Basis von A-E liegt in einer Verbesserung der Verbundfestigkeit und/oder Erhöhung der Wärmestandfestigkeit der mit den Polymeren P gefüllten Systeme gegenüber den Reaktivklebstoffen auf der Basis von A-E.

Der gewichtsmäßige Anteil der Polymeren P an den erfindungsgemäßen Mischungen liegt vorzugsweise zwischen 0,1 und 70 Gew.-%, bezogen auf die Summe der Substanzen A) bis E). Sofern als Polymere P hydroxylgruppenhaltige Polymere eingesetzt werden, bei denen der Anteil der Hydroxylgruppen mehr als 1 Gew.-% beträgt, sind solche Mischungen bevorzugt, die ein stöchiometrisches Verhältnis zwischen der Molmasse aller aktivierbaren NCO-Funktionen einerseits und aller Hydroxy- und/oder Aminfunktionen der Gesamtmischung andererseits innerhalb der Grenzen 3:1 und 1:3, bevorzugt 1,66:1 und 0,66:1 vorgeben.

Bevorzugte Polyisocyanate A haben einen Schmelzpunkt über 40° C, vorzugsweise über 80° C, z.B. 1,5-Naphthalindiisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis-[4-(4- oder 2-isocyanatophenylmethyl)-phenyl]-harnstoff. Besonders bevorzugt ist dimeres 2,4-Diisocyanatotoluol.

Die Polyisocyanate werden vorzugsweise durch Einwirkung beispielsweise von aliphatischen Polyaminen mit Molekulargewichten von 32 bis 399 und gegebenenfalls durch Einwirkung von aliphatischen Polyaminen mit Molekulargewichten von 400 bis 8000 desaktiviert. Als Beispiele für derartige Polyamine seien genannt: Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin.

Als Stabilisatoren zur Desaktivierung kommen z.B. ferner in Frage:
Hydrazin, zumeist in Form von Hydrazinhydrat, $C_1$-$C_6$-alkylsubstituierte Hydrazine, z.B. Methylhydrazin, Ethylhydrazin, Hydroxyethyl-hydrazin oder N,N'-Dimethylhydrazin, Verbindungen mit Hydrazid-Endgruppen wie z.B. Carbodihydrazid, Ethylen-bis-carbazinester, β-Semicarbazido-propionsäurehydrazid oder Isophoron-bis-semicarbazid Weitere Desaktivierungsmittel sind in DE-A-3 230 757 und 3 112 054 aufgezählt.

Als Stabilisatoren für die Isocyanatkomponente können auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]-non-5-en. Weitere Beispiele für derartige Amidine sind in der DE-A-3 403 500 aufgeführt.

In einer ganz besonders bevorzugten Ausführungsform sind die Polyisocyanate A stabilisiert mit 3,3'-Dimethyl-4,4'-diaminodicyclohexylmethan, Methylnonandiamin oder 2,5-Dimethylpiperazin. Zusätzlich können auch höhermolekulare Di- und Polyamine verwendet, die beispielsweise durch Aminieren von Polyoxyalkylenglykolen mit Ammoniak gemäß BE-PS 634 741 oder US-A-3 654 370 erhalten werden.

Besonders bevorzugt sind lagerstabile Suspensionen der desaktivierten Polyisocyanatteilchen A in hydroxy- und/oder aminofunktionellen Verbindungen B, wobei die Verbindungen B gleichzeitig als Suspensionsmedium dienen. In einer bevorzugten Ausführungsform wird das Verhältnis der Substanzen A und B so gewählt, daß auf 1 Äquivalent NCO-Gruppen der Verbindungen A 1/3 bis 3 Äquivalente NCO-reaktive Gruppen der Verbindungen B entfallen.

Bevorzugte NCO-reaktive Verbindungen B sind Polyester, Polyether, Polythioether, Polyacetale, Polycarbonate und Polyesteramide. Beispiele hierfür sind z.B. in der DE-A-2 920 501, DE-A-2 854 384 und der DE-A-3 230 757 aufgeführt. Auch bereits Urethan- oder Harnstoffgruppen enthaltende Polyamin- oder Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind (gefüllte Polyole); der Aggregatzustand dieser gefüllten Polyole ist flüssig.

Polyaddukthaltige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet. Vertreter dieser erfindungsgemäß zu verwendenden Verbindungen sind z.B. in High Polymers, Vol XVI, "Polyurethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Die obengenannten Polyole B können gegebenenfalls durch Vorreaktion mit einem Unterschuß Polyisocyanat modifiziert sein.

Als Polyamine B können flüssige, nieder- und/oder höhermolekulare, aromatische und/oder aliphatische Polyamine, insbesondere mit einem Molekulargewicht von 400 bis 600, verwendet werden. Bevorzugt werden höhermolekulare aliphatische Polyamine, gegebenenfalls mit untergeordneten Mengen niedermolekularer aliphatischer Polyamine.

In einer bevorzugten Ausführungsform werden höhermolekulare Polyaminoverbindungen mit aliphatischen Aminogruppen mit einem Äquivalentgewichtsbereich von 200 bis 3000, vorzugsweise von 300 bis 2000 eingesetzt, wie sie z.B. durch reduktive Aminierung von Polyoxyalkylenglykolen mit Ammoniak nach BE-PS 634 741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung von cyanethylierten Polyoxypropylenglykolen (DE-A-1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A-2 546 536. Geeignete höhermolekulare Di-und Polyamine sind auch die nach DE-A-29 48 419, DE-A-3 039 600, DE-A-3 112 118, der EP-A-61 627, EP-A-71 132 und EP-A-71 139 durch alkalische Hydrolyse von NCO-Prepolymeren (mit aliphatischen Diisocyanaten) mit Basen über die Carbamatstufe zugänglichen Polyamine.

Es handelt sich bei dem Verfahren nach DE-A-2 948 419 und den anderen zitierten Literaturstellen vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die höhermolekularen Polyamine können jedoch auch nach anderen Verfahren, z.B. durch Umsetzung von NCO-Prepolymeren mit überschüssigen Mengen an Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung.

Diese höhermolekularen, aliphatischen Polyamine können sowohl als Stabilisatoren für die Polyisocyanatkomponente als auch als weitere als Suspendiermedium und Reaktivkomponente B dienende Komponente Verwendung finden.

Zusätzlich können niedermolekulare Kettenverlängerer C verwendet werden, insbesondere niedermolare aromatische Diamine des Molekulargewichtsbereiches 108 bis 399, die die Aminogruppen auch an heterocyclischen Resten mit aromatischem Charakter gebunden, enthalten können.

Gegebenenfalls können die üblichen Polyurethankatalysatoren D, mit besonders gutem Effekt tertiäre Amine oder Metallkatalysatoren, verwendet werden.

Es sind dies z.B. tertiäre Amine, wie Triethylamin, Tributylamin, N,N,N′,N′-Tetramethyl-ethylendiamin, 1,4-Diaza-bicyclo-(2,2,2)-octan, N,N-Dimethylbenzylamin, N,N-Dimethylcyclohexylamin.

As organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-ethylhexanoat und Zinn(II)-stearat und die Dialkylzinnsalze von Carbonsäuren, wie z.B. Dibutylzinndilaurat oder Dioctylzinndiacetat in Betracht. Als organische Bleiverbindungen kommen vorzugsweise Blei(II)-salze von Carbonsäuren wie Blei(II)-naphthenat, Blei(II)-ethylhexanoat, Blei(II)-stearat, aber auch z.B. Blei(II)-bis-diethyldithiocarbamat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der DE-A 3 230 757 beschrieben.

4

EP 0 417 540 A2

Die Katalysatoren werden in der Regel in einer Menge zwischen etwa 0,001 und 10 Gew.-%, bezogen auf die Gesamtzusammensetzung eingesetzt.

Als gegebenenfalls enthaltene anorganische Hilfs- und Zusatzstoffe E seien genannt: Farbstoffe oder Pigmente, Füllstoffe wie Schwerspat, Kreide, Quarzmehl, Kieselgur, Silicagel, Fällungskieselsäuren, pyrogene Kieselsäuren, Gips, Talkum, Aktivkohle, Ruß, Metallpulver.

Es können ferner auch Reaktionsverzögerer, z.B. sauer reagierende Stoffe wie Salzsäure, organische Säurehalogenide oder organische Säuren, ferner Flammschutzmittel der an sich bekannten Art, z.B. Trischlorethylphosphat oder Ammoniumphosphat und -polyphosphat, sowie Stabilisatoren gegen Alterungs- und Witterungseinflüsse wie phenolische Antioxidantien und Lichtschutzmittel, Weichmacher und fungistatisch und/oder bakteriostatisch wirkende Substanzen mitverwendet werden.

Beispiele sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in DE-A-2 854 384 und 2 920 501 beschrieben.

Je nach Viskosität und Schmelzverhalten der Ausgangskomponenten und je nach Art und Menge der zugesetzten Füllstoffe erhält man bei Raumtemperatur mehr oder weniger viskose PU-Reaktiv-Klebstoffmischungen. Diese Reaktiv-Klebstoffmischungen sind Suspensionen eines festen, durch Polyadduktumhüllung stabilisierten Polyisocyanats in der Polyol- und Polyamin-Komponente.

Die Erfindung wird durch die nachfolgenden Ausführungsbeispiele näher erläutert, alle Angaben nach Teilen, Verhältnissen und Prozentsätzen sind dabei als Gewichtsteile, Gewichtsverhältnisse und Gewichtsprozente zu lesen, wenn nicht anders angegeben.


Allgemeine Arbeitsvorschrift zur Herstellung der Klebstoffzubereitung

Zu einer Suspension eines retardierten Polyisocyanates im Gemisch von niedermolekularen Polyhydroxy- und/oder Polyaminoverbindungen mit einer Viskosität (gemessen gemäß DIN 53 019 bei Raumtemperatur) von 0,1 bis 250 Pa.s, bevorzugt 0,1 bis 10 Pa.s, werden bei Raumtemperatur oder mäßig erhöhter Temperatur <50°C unter fortgesetztem Rühren die vorgegebenen Anteile des oder der Mischung der feinvermahlenen Polymeren gegeben, bis eine makroskopisch homogene Masse entstanden ist.

Zur Herstellung größerer Mengen der erfindungsgemäßen Mischungen sind Rühr- und Mischwerkzeuge mit rotierenden Rührorganen wie z.B. Anker- oder Wendelrührer oder auch Z- oder Sigma-Kneter geeignet.


Applikation der erfindungsgemäßen Mischungen als Klebstoffe, allgemeines Verfahren

Die erfindungsmäßigen Mischungen werden bei Temperaturen <50°C, bevorzugt bei Raumtemperatur, auf eines oder beide der zu verbindenden Teile aufgebracht.

Wenn es die Reaktivität und Thermostabilität der Mischungen zuläßt, sind auch Applikationstemperaturen >50°C gestattet.


Aushärtung der Klebfugen

Zur Erzeugung der endgültigen Verbundfestigkeiten ist Wärmezufuhr erforderlich. Darunter ist die Erhöhung der Temperatur in der Klebfuge auf einen Wert oberhalb dem vom Anwender je nach Rezeptur und Fügeteilwerkstoff vorgegebenen Wertes und die Überschreitung dieses Wertes für eine bestimmte Dauer, in der Regel 10 sec bis 60 min, bevorzugt 30 sec bis 20 min zu verstehen.

In jedem Falle aber ist für den vorgegebenen Aushärtungszeitraum eine Temperatur über der rezepturspezifischen "Aufdicktemperatur" des retardierten Polyisocyanates nach der Lehre der DE-A-3 403 499 vorzugeben.

Unter der "Aufdicktemperatur" wird dasjenige Temperaturintervall verstanden, unterhalb dessen eine Einkomponenten-PUR-Reaktivmasse mindestens 1 Stunde ohne Viskositätserhöhung lagerfähig und verarbeitbar bleibt, oberhalb dessen innerhalb einer Zeit < 60 min unter deutlichem Viskositätsanstieg die Polyaddition beginnt abzulaufen. Dieses Temperaturintervall beträgt im allgemeinen 3 - 5°C, Intervalle bis zu 10°C sind möglich.

Als Fügewerkstoffe für die erfindungsgemäßen Klebstoffmischungen sind Metalle, Glas und Keramik sowie Holz und Holzwerkstoffe geeignet. Geeignet sind auch thermofeste Kunststoffe wie z.B. Polyester, ABS, Polycarbonat, Polyphenylensulfid oder glasfaserverstärkte Kunststoffe, um einige zu nennen.

5

Die Fügewerkstoffe können gegebenenfalls nach dem Fachmann bekannten Verfahren, wie z.B. Aufrauhen oder Anätzen, für die Verklebung vorbereitet sein.

Grundsätzlich ungeeignet sind Fügeteile, deren Schmelz-, Erweichungs- oder Zersetzungstemperatur unterhalb der rezepturspezifischen Aufdicktemperatur gelegen ist.

## Ausführung der Verklebungen

4 mm starke SMC-Plättchen von 20 mm Breite und 40 mm Länge werden mit 10 mm Überlappung verklebt, indem man ein SMC-Plättchen auf dieser Überlappungsfläche mit dem erfindungsmäßigen Gemisch beschichtet und das zweite, gegebenenfalls nicht beschichtete Plättchen mit der angegebenen Überlappung darauf legt. Ein drittes SMC-Plättchen mit gleichen Abmessungen wird als Widerlager und als Fixierhilfe zur Vermeidung von Überlappungsveränderungen bei der Aushärtung verwendet. Ein auf diesem dritten SMC-Plättchen liegendes Distanzblech von 200 $\mu$ bewirkt als Zwischenlage zwischen Widerlager und aufgelegtem SMC-Plättchen eine konstante Klebfugendicke von 200 $\mu$m.

## Charakteristik des Bruchtyps der Klebfuge

Als A-Bruch wird derjenige Bruchtyp bezeichnet, bei welchem die Separation an der Phasengrenze Klebstoff/Fügeteil auftritt.

K-Bruch bedeutet Separation innerhalb der Klebfuge.

MA (Materialbruch) bedeutet: Versagen des Fügeteilwerkstoffs bei Zugscherprüfung.

## Klebstoffgrundmischungen

Klebstoffgrundmischungen, im folgenden "Mischung 1", "Mischung 2" usf. genannt, werden als Basiskomponenten für die Einarbeitung der erfindungsgemäßen polymeren Zusatzstoffe verwendet. Während die Mischungen 1, 3, 4 und 5 sowohl hydroxy- als auch aminofunktionelle Bestandteile zur Umsetzung mit den retardierten Polyisocyanaten bereitstellen, enthält Mischung 2 nur hydroxyfunktionelle Reaktionskomponenten, Mischung 6 dagegen nur aminofunktionelle Reaktionskomponenten. Die Mischungen 1 - 3 einerseits und die Mischungen 4 und 5 andererseits enthalten jeweils die gleichen retardierten Polyisocyanate.

## Mischung 1

Zu einem Gemisch aus 55 Teilen eines auf 2,2-Bis-(4-hydroxyphenyl)-propan gestarteten Polyoxypropylenetherdiols vom Molekulargewicht 550, 40 Teilen eines Polyoxypropylenether-Diamins vom Molekulargewicht ca 1.000, welches aus einem auf 2,2-Bis-(4-hydroxyphenyl)-propan gestartetem Polyoxypropylenetherdiol durch Druckaminierung mit $NH_3$ gewonnen wurde, 5 Teilen 2,4/2,6-Diamino-3,5-diethyltoluol (Isomerenverhältnis 65/35), 0,3 Teilen 4,4'-Diamino-3,3'-dimethyl-dicyclohexylmethan und 0,4 Teilen Blei-2-Ethylhexanoat werden 10 Teile eines Aerosils (Aerosil R 202, Degussa) sowie 64,5 Teile dimeri siertes Toluylendiisocyanat zugesetzt. Nach dem Homogenisieren und Entgasen im Vakuum erhält man eine bei Raumtemperatur gießbare, thixotrope Suspension mit einer Aufdicktemperatur von 76 -82° C. Härte nach Verfestigung ca. 76 Shore D.

## Mischung 2

In einer Mischung aus 268 Teilen eines Polyoxypropylenetherdiols vom Molekulargewicht 1.000, 120 Teilen eines Polyoxypropylenethertriols vom Molekulargewicht 450, 12 Teilen Ethylenglykol und 0,2 Teilen Blei-(II)-bisethylhexanoat (24 % Pb) werden bei Raumtemperatur 61,64 Teile dimeres Toluylen-2,4-diisocyanat suspendiert und die Suspension unter Rühren auf 120° C erwärmt. Das dimere Toluylen-2,4-diisocyanat geht dabei in Lösung und reagiert innerhalb weniger Minuten mit dem Polyolgemisch ab (IR-Nachweis, Viskositätsanstieg). Nach 2-stündigem Entgasen bei 90° C erhält man eine leicht opake, vorverlängerte Polyolmischung mit einer Viskosität von 35.000 mPas bei 22° C bzw. 500 mPas bei 70° C.

Man setzt nun 2,0 Teile eines Polyoxypropylenethertriamins vom Molekulargewicht 438 dem oben beschriebenen, vorverlängerten, höhermolekularen Polyol zu und suspendiert darin anschließend 273,6 Teile dimeres Toluylen-2,4-diisocyanat. Nach 1-stündigem Entgasen bei 50° C erhält man eine bei Raumtemperatur gut lagerfähige Einkomponenten-PU-Klebstoffmasse mit einer Viskosität von 100.000 mPas bei 23° C.

Bei 120° C härtet sie rasch zu einem zäh-harten Polyurethan der Härte 70 Shore D aus,

## Mischung 3

Zu einer Mischung aus 100 Teilen eines Polyoxypropylenoxyethylenethertriols mit 13,4 % Ethylenoxid-Endblock und einem Molekulargewicht von ca. 6.000, 6 Teilen 2,4/2,6-Diamino-3,5-diethyltoluol (Isomerenverhältnis 65/35), 0,34 Teilen 4,4'-Diamino-3,3'-dimethyl-dicyclohexylmethan 0,2 Teilen Pb-2-Ethylhexanoat (s. Mischung 1) und 0,1 Teilen 2-Ethylhexansäure werden 20 Teile durch Umsetzung mit Trimethylchlorsilan hydrophobierte Füllungs-Kieselsäure (Sipernat D 17 der Firma Degussa), 8 Teile K-Al-Silicat 3 Angström (Baylith L der Firma Bayer AG) und 22,79 Teile dimeres Toluylen-2,4-diisocyanat zugesetzt. Nach dem Homogenisieren und Entgasen im Vakuum erhält man eine Suspension mit einer Aufdicktemperatur von 71 -76° C und einer Viskosität von ca. 30 Pa.sec/23° C. Nach Aushärtung bei 120° C liegt die Shore-A-Härte bei ca. 88.

## Mischung 4

Zu einer Mischung aus 78 Teilen eines aromatischen Aminopolyethers (erhalten durch Umsetzung eines Gemisches aus 35,3 Gew.-% eines Polyoxypropylenetherdiols mit Molgewicht ca. 2.000, 31,4 Gew.-% eines auf Trimethylolpropan gestarteten Polyoxypropylenethertriols mit Molgew. ca. 3.000 und 33,3 Gew.-% eines auf Glycerin gestarteten Polyoxypropylen-oxyethylenethertriols mit Molgew. ca, 5.000 und Toluylendiisocyanat im Äquivalentverhältnis NCO/OH = 2 : 1, hergestellt nach dem Verfahren gemäß DE-A-2 948 419), 14,5 Teilen eines auf Trimethylolpropan gestarteten Polyoxyethylenethertriols vom Mo lekulargewicht ca. 700, 7,5 Teilen Diethylenglycol, 1,0 Teilen 4,4'-Diamino-3,3'-dimethyl-dicyclohexylmethan und 0,1 Teilen Sn-II-bis-2-Ethylhexanoat werden 66,67 Teile feinpulverisierter 3,3'-Diisocyanato-4,4'-dimethyl-N,N'-diphenylharnstoff, hergestellt nach dem Verfahren gemäß DE-OS 3 638 148, zugesetzt. Nach dem Homogenisieren und Entgasen erhält man eine Suspension mit einer Aufdicktemperatur von 85 - 95° C. Nach Aushärtung bei 150° C beträgt die Härte 70 Shore D.

## Mischung 5

Zu 100 Teilen eines Polyoxypropylen-oxyethylenether-triols mit 17,6 Gew.-% Ethylenoxidanteil und einem Molgewicht von ca. 6.000 werden 2,0 Teile Diethylentriamin zugesetzt und zu dieser Mischung unter raschem Rühren 5,05 Teile Toluylen-2,4-diisocyanat zugesetzt. Nach 30-minütigem Erhitzen auf 100° C werden unter langsamem Rühren 0,01 Teile Pb-2-Ethylhexanoat (s. Mischung 1) zugesetzt und nochmals 30 Minuten unter langsamem Rühren und Vakuum auf 100° C gehalten. Man erhält ein gut thixotropiertes Polyether-Triol. Zu einer Mischung aus 53 Teilen dieses thixotropierten Polyether-Triols, 50 Teilen eines auf Trimethylolpropan gestarteten Polyoxypropylenethertriamins vom Molgewicht ca. 5.300, 2 Teilen 2,4/2,6-Diamino-3,5-diethyltoluol (Isomerenverhältnis 65/35), 1,0 Teilen Pb-2-Ethylhexanoat (s. Mischung 1) und 0,2 Teilen 4,4'-Diamino-3,3'-dimethyl-dicyclohexylmethan werden nacheinander 3 Teile durch Umsetzung mit Trimethylchlorsilan hydrophobierte pyrogene Kieselsäure (Aerosil R 202 der Firma Degussa), 6 Teile K-Al-Silikat (3 Å) 1,57 Teile dimeres Toluylen-2,4-diisocyanat und 17,85 Teile pulverförmiger 3,3'-Diisocyanato-4,4'-dimethyl-N,N'-diphenylharnstoff gemäß DE-OS 3 638 148 zugesetzt. Nach dem Homogenisieren und Entgasen erhält man eine thixotrope Suspension mit einer Aufdicktemperatur von 72 -75° C. Nach Verfestigung bei 120° C beträgt die Härte 90 Shore A.

## Mischung 6

Zu einer Mischung aus 100 Teilen eines auf 2,2-Bis-(4-hydroxyphenyl)-propan gestarteten Polyoxypropylenetherdiamins vom Molekulargewicht ca. 1.000 und 1,0 Teilen 4,4'-Diamino-3,3'-dimet-

7

EP 0 417 540 A2

hyldicyclohexylmethan werden 27,5 Teile fein vermahlenes (Korngröße < 40 μMeter) Naphthylen-1,5-diisocyanat zugesetzt. Nach Homogenisieren und Entgasen im Vakuum erhält man eine Suspension mit einer Aufdicktemperatur von 72 - 77° C. Die Härte beträgt nach Verfestigung bei 120° C 50 Shore D.

Als Klebstoffe kommen nun Abmischungen der oben beschriebenen Mischungen 1 - 6 mit im folgenden unter P1 bis P5 beschriebenen feinvermahlenen Polymeren mit Korngrößen um ca. 100 μ zum Einsatz:

P1: Hydroxypolyurethan auf Basis weitgehend linearer aliphatischer Polyester auf Basis von Hexandiol und Methylen-diphenyl-4.4'-diisocyanat mit Molgewicht $\overline{M}_w$ von ca. 100.000.

P2: Copolyamid auf Basis von Laurinlactam mit einem Schmelzbereich von 115 - 119° C und einem Schmelzindex nach DIN 53 735 von 100 g/10 min bei 160° C.

P3: Ethylen-Vinylacetat-Copolymer mit ca. 30 % Vinylacetatanteil und einem Schmelzindex nach DIN 53 735 von 25 g/10 min bei 180° C.

P4: Ethylen-Vinylacetat-Vinylalkohol-Copolymer mit ca. 1 - 2 Gew.-% Vinylacetatanteil.

P5: Acrylnitril-Butadien-Styrol-Copolymer mit einem Polybutadienanteil von 50 Gew.-% und einer Pfropfhülle aus Acrylnitril/Styrol mit einem Molgewicht von ca 100.000 und einem Schmelzbereich unter Sauerstoffausschluß von > 260° C.

Die Herstellung der erfindungsgemäßen Zubereitungen erfolgt nach den auf S. 14 ff beschriebenen Verfahren.

Die Bezeichnung der so hergestellten Klebstoffe erfolgt unter dem Begriff "Rezeptur" mit fort laufender numerischer Indizierung:

| Rezeptur Index | Mischung Nr. | + Gew.-% Polymer $P_n$ |
|---|---|---|
| 1 | 1 | - |
| 2 | 2 | - |
| 3 | 3 | - |
| 4 | 4 | - |
| 5 | 5 | - |
| 6 | 6 | - |
| 7 | 1 | 10 P1 |
| 8 | 1 | 10 P2 |
| 9 | 1 | 10 P4 |
| 10 | 1 | 10 P5 |
| 11 | 2 | 10 P1 |
| 12 | 2 | 10 P2 |
| 13 | 2 | 10 P3 |
| 14 | 2 | 10 P4 |
| 15 | 2 | 10 P5 |
| 16 | 3 | 10 P1 |
| 17 | 3 | 10 P2 |
| 18 | 3 | 10 P4 |
| 19 | 3 | 10 P5 |
| 20 | 3 | 10 P5 |
| 21 | 4 | 10 P1 |
| 22 | 4 | 10 P2 |
| 23 | 4 | 10 P4 |
| 24 | 4 | 10 P5 |
| 25 | 5 | 10 P1 |
| 26 | 5 | 10 P5 |
| 27 | 6 | 10 P1 |
| 28 | 6 | 10 P2 |
| 29 | 6 | 10 P4 |
| 30 | 6 | 10 P5 |

Die nach der oben angegebenen Applikationsmethode hergestellten Prüflinge werden in einem Umluftofen 30 Minuten bei 130° C ausgehärtet. Man läßt die ausgehärteten Prüflinge an der Luft abkühlen und dann 24 Stunden bei Raumtemperatur lagern.

8

Klebtechnische Prüfung

Die klebtechnische Prüfung erfolgt auf einer Zugprüfmaschine nach DIN 51 221 in Anlehnung an DIN 53 283 mit SMC-109-Prüflingen der obengenannten Abmessungen. Die angegebenen Meßwerte sind Mittelwerte aus 5 Prüfungen.

Wärmestandfestigkeit

Zur Messung der Wärmestandfestigkeit werden die nach den oben beschriebenen Verfahren hergestellten Prüflinge in einem EUROTHERM T-5060-E Umluftofen der Firme HERAEUS (Hanau) mit einer konstanten Zugbelastung von 20 N/cm² der Überlappungsfläche beginnend bei 40° C mit einer Heizrate von 30° C/Stunde geprüft. Als Wärmestandfestigkeit wird die Temperatur bezeichnet, bei welcher die Fügeteile sich voneinander lösen. Die gefundenen Werte sind Mittelwerte aus 5 Messungen.

## Ergebnisse der klebtechnischen Prüfungen

| Rezeptur Index | Zugscherf. [N/mm²] | Rezeptur Index | Zugscherf. [N/mm²] |
|---|---|---|---|
| 1 | 9,0 | 16 | 5,4 |
| 2 | 7,5 | 17 | 5,7 |
| 3 | 4,9 | 18 | 6,9 |
| 4 | 8,3 | 19 | 7,3 |
| 5 | * 4,3 | 20 | 6,6 |
| 6 | 6,6 | 21 | 10,0 |
| 7 | 11,1 | 22 | 8,7 |
| 8 | 10,2 | 23 | 9,4 |
| 9 | 11,5 | 24 | 10,1 |
| 10 | 10,8 | 25 | * 5,7 |
| 11 | 8,4 | 26 | * 5,0 |
| 12 | 8,4 | 27 | 7,9 |
| 13 | 8,6 | 28 | 7,4 |
| 14 | 8,0 | 29 | 6,4 |
| 15 | 9,0 | 30 | 7,3 |

**\* = Ausgehärtet bei 140° C/30 min**

| Rezeptur Index | Wärmestandf. [ °C ] | Rezeptur Index | Wärmestandf. [ °C ] |
|---|---|---|---|
| 1 | 173 | 14 | 178 |
| 2 | 169 | 17 | 199 |
| 3 | 190 | 19 | 201 |
| 4 | 187 | 23 | 191 |
| 5 | * 161 | 27 | 180 |
| 6 | 178 | 28 | 183 |
| 7 | 176 | 29 | 183 |
| 9 | 180 | 30 | 180 |
| 10 | 180 | | |

* = Ausgehärtet bei 140° C /30 min

**Ansprüche**

1. Polyurethan-Reaktivklebstoffmassen auf Basis von
   A) teilchenförmigen Polyisocyanaten mit desaktivierter Oberfläche,
   B) isocyanatreaktiven Verbindungen mit einem $\overline{MG}_w$ größer als 400,
   C) gegebenenfalls wenigstens einem Kettenverlängerer mit einem Molekulargewicht kleiner als 400,
   D) gegebenenfalls üblichen Polyurethankatalysatoren,
   E) gegebenenfalls üblichen Zusatzstoffen, dadurch gekennzeichnet, daß zusätzlich feindisperse, bei einer Temperatur kleiner als 70° C feste Polymere P mit einem $\overline{MG}_w$ von wenigstens 3000 enthalten sind.

2. Klebstoffmassen nach Anspruch 1, dadurch gekennzeichnet, daß die Polymerteilchen P im wesentlichen einen mittleren Teilchendurchmesser von 100-500 μm aufweisen.

3. Klebstoffmassen nach wenigstens einem der vorhergehenden Ansprüche, dadurch gekennzeichnet, daß wenigstens 99 Gew.-% der Polymerteilchen P einen mittleren Teilchendurchmesser von wenigstens 0,25 μm aufweisen.

4. Klebstoffmassen nach wenigstens einem der vorhergehenden Ansprüche, dadurch gekennzeichnet, daß als Polymere P weitgehend lineare Hydroxypolyurethane auf der Basis von linearen Polyethern und/oder Polyestern und/oder Polyetherestern und aromatischen Polyisocyanaten enthalten sind.

5. Klebstoffmassen nach wenigstens einem der vorhergehenden Ansprüche, dadurch gekennzeichnet, daß als Polymerteilchen P Copolyamide auf Basis von Caprolactam und/oder Lauryllactam oder von Caprolactam und dimeren Fettsäuren enthalten sind.

6. Klebstoffmassen nach wenigstens einem der vorhergehenden Ansprüche, dadurch gekennzeichnet, daß als Polymere P Copolymere von α-Olefinen, Polyvinylformale, Acrylnitril-Butadien-Styrol-Copolymere oder weitgehend lineare Polyester enthalten sind.

7. Klebstoffmassen nach wenigstens einem der vorhergehenden Ansprüche, dadurch gekennzeichnet, daß als Polyisocyanate A feste, feinteilige Polyisocyanate mit einem Schmelzpunkt größer als 80° C eingesetzt werden, deren NCO-Gruppen zu 0,1 bis 25 Äquivalentprozent desaktiviert sind.

8. Klebstoffmassen nach wenigstens einem der vorhergehenden Ansprüche, dadurch gekennzeichnet, daß als NCO-reaktive Verbindungen B Polyole und/oder Polyamine enthalten sind.

9. Verfahren zum Verkleben von Substraten mit einem Polyurethan-Reaktivklebstoff, dadurch gekennzeichnet, daß ein Polyurethan-Reaktivklebstoff gemäß wenigstens einem der vorhergehenden Ansprüche verwendet wird.